(19) Europäisches Patentamt
European Patent Office
Office européen des brevets

(11) **EP 2 166 491 B1**

(12) **EUROPÄISCHE PATENTSCHRIFT**

(45) Veröffentlichungstag und Bekanntmachung des Hinweises auf die Patenterteilung:
**31.07.2013 Patentblatt 2013/31**

(21) Anmeldenummer: **08016536.8**

(22) Anmeldetag: **19.09.2008**

(51) Int Cl.:
*G06N 3/08* *(2006.01)*     *B60R 21/01* *(2006.01)*

(54) **Verfahren zum rechnergestützten Lernen einer Steuerung eines technischen Systems basierend auf Zeitreihen**

Method for computer-assisted learning of the control of a technical system based on time-series

Procédé d'apprentissage assisté par ordinateur d'une commande d'un système technique basé sur des séries chronologiques

(84) Benannte Vertragsstaaten:
**DE FR GB IT**

(43) Veröffentlichungstag der Anmeldung:
**24.03.2010 Patentblatt 2010/12**

(73) Patentinhaber: **Siemens Aktiengesellschaft**
**80333 München (DE)**

(72) Erfinder:
• **Krätschmer, Manfred**
**85283 Wolnzach (DE)**
• **Leirich, Oskar**
**93098 Mintraching (DE)**
• **Otte, Clemens, Dr.**
**81739 München (DE)**

(56) Entgegenhaltungen:
**DE-A1- 19 909 538     US-A1- 2003 200 188**

• **CHRISTIAN MOEWES: "Application of Support Vector Machines to Discriminate Vehicle Crash Events" [Online] 15. Oktober 2007 (2007-10-15), OTTO-VON-GUERICKE UNIVERSITY OF MAGDEBURG, FACULTY OF COMPUTER SCIENCE, DEPARTMENT OF KNOWLEDGE AND LANGUAGE PROCESSING , MAGDEBURG , XP007906895 Gefunden im Internet: URL:http:// fuzzy.cs.uni-magdeburg.de/aigai on/index.php/ attachments/single/12> [gefunden am 2009-01-27] * Seiten 17-98 ***

• **CHRISTIAN MOEWES, CLEMENS OTTE, AND RUDOLF KRUSE: "Tackling Multiple-Instance Problems in Safety-Related Domains by Quasilinear SVM" SPRINGER SERIES: ADVANCES IN INTELLIGENT AND SOFT COMPUTING, SOFT METHODS FOR HAND. VAR. AND IMPRECISION, [Online] Bd. 48, 8. September 2008 (2008-09-08), Seiten 409-416, XP002512224 Springer-Verlag Berlin Heidelberg ISBN: 978-3-540-85026-7 Gefunden im Internet: URL: http://dx.doi.org/10.1007/978-3-540-85 027-4> [gefunden am 2009-01-27]**

• **NUSSER, S., OTTE, C. & HAUPTMANN, W.: "Learning Binary Classifiers for Applications in Safety-Related Domains" PROCEEDINGS OF 17TH WORKSHOP COMPUTATIONAL INTELLIGENCE, SCHRIFTENREIHE DES INSTITUTS FÜR ANGEWANDTE INFORMATIK / AUTOMATISIERUNGSTECHNIK, [Online] Bd. 20, 5. Dezember 2007 (2007-12-05), Seiten 139-151, XP002511515 Karlsruhe, Germany ISSN: 1614-5267 ISBN: 978-3-86644-191-0 Gefunden im Internet: URL:http://digbib.ubka.uni- karlsruhe.de/vo lltexte/1000007008> [gefunden am 2009-01-27]**

EP 2 166 491 B1

**Beschreibung**

Die Erfindung betrifft ein Verfahren zum rechnergestützten Lernen einer Steuerung eines technischen Systems basierend auf Zeitreihen sowie ein entsprechendes Verfahren zur Steuerung eines technischen Systems und ein entsprechendes Computerprogrammprodukt.

Technische Systeme werden heutzutage häufig basierend auf Zeitreihen gesteuert, wobei die Zeitreihen dabei binär in eine erste und eine zweite Klasse klassifiziert werden und in Abhängigkeit von der Klassifikation die Steuerung durchgeführt wird. Die Zeitreihen stellen dabei jeweils eine Mehrzahl von zeitlich aufeinander folgenden Zustandsvektoren des technischen Systems dar, wobei diese Zustandsvektoren wiederum einen oder mehrere Zustände umfassen, welche in dem technischen System insbesondere über Sensoren gemessen wurden.

Zeitreihen spielen beispielsweise bei der Steuerung einer Automatisierungsanlage eine Rolle. Die Zeitreihen stellen dabei zu aufeinander folgenden Zeitpunkten gemessene Messgrößen in der Automatisierungsanlage dar. Beim Auslösen einer Notabschaltung einer Maschine der Automatisierungsanlage muss eine Zeitreihe entweder der Klasse "Auslösen" oder der Klasse "Nichtauslösen" zugewiesen werden. Bei der Zuordnung zur Klasse "Auslösen" erfolgt die Notabschaltung und bei der Zuordnung zu der Klasse "Nichtauslösen" wird die Notabschaltung nicht ausgelöst. Bei einem Ereignis, bei dem die Notabschaltung nicht ausgelöst wird, darf zu keinem Zeitpunkt eine Auslöseentscheidung erfolgen. Demgegenüber muss bei einem Ereignis der Klasse "Auslösen" bis zu einem bestimmten Zeitpunkt die Notabschaltung ausgelöst werden.

Insbesondere bei sicherheitskritischen Anwendungen ist es für die Steuerung eines technischen Systems basierend auf Zeitreihen wesentlich, dass ein Klassifikator vorab geeignet mit Trainingsdaten trainiert wurde, um anschließend immer eine korrekte Klassifikation im Realbetrieb des technischen Systems zu liefern, so dass auch in kritischen Situationen die richtige Entscheidung zur Steuerung des Systems getroffen wird. Aus dem Stand der Technik sind zwar verschiedene Verfahren zur Klassifikation bekannt, jedoch berücksichtigen diese Verfahren nicht die technischen bzw. physikalischen Eigenschaften des Verhaltens des technischen Systems, d.h. sie sind losgelöst von der technischen Anwendung.

In der Druckschrift Christian Moewes: "Application of Support Vector Machines to Discriminate Vehicle Crash Events", 15. Oktober 2007, Otto-von-Guericke University of Magdeburg, wird das Lernen eines Klassifikators unter Verwendung von Support Vector Machines beschrieben. Der Klassifikator wird in geeigneter Weise auf Trainingsdaten betreffend Fahrzeugunfälle gelernt und dient dazu, Fahrzeugunfälle dahingehend zu klassifizieren, ob ein Sicherheitssystem im Fahrzeug ausgelöst wird oder nicht.

In der Druckschrift Christian Moewes, Clemens Otte, and Rudolf Kruse: "Tackling Multiple-Instance Problems in Safety-Related Domains by Quasilinear SVM", Springer Series: Advances in Intelligent and Soft Computing, Soft Methods for Hand. Var. and Imprecision, Bd. 48, 8, September 2008, Seiten 409-416, wird das Lernen von Klassifikatoren für sicherheitsbezogene Anwendungen unter Verwendung von Support Vector Machines bzw. quasilinearen Support Vector Machines offenbart.

Das Dokument DE 199 09 538 A1 beschreibt einen Auslösealgorithmus zum Auslösen eines Kraftfahrzeug-Insassenschutzsystems bei einem Aufprall. Der Algorithmus verwendet einen Klassifikationsabschnitt, der zur Erkennung der Unfallart dient.

Aufgabe der Erfindung ist es, eine Steuerung eines technischen Systems basierend auf Zeitreihen zu schaffen, welche spezifische Eigenschaften des betrachteten technischen Systems berücksichtigt.

Diese Aufgabe wird durch das Verfahren gemäß Patentanspruch 1 bzw. durch das Verfahren gemäß Patentanspruch 13 bzw. durch das Computerprogrammprodukt gemäß Patentanspruch 14 gelöst. Weiterbildungen der Erfindung sind in den abhängigen Ansprüchen definiert.

In dem erfindungsgemäßen Verfahren wird eine Steuerung eines technischen Systems gelernt, welche auf Zeitreihen basiert. Eine Zeitreihe umfasst eine Mehrzahl von zeitlich aufeinander folgenden Zustandsvektoren, die eine oder mehrere Zustände des technischen Systems enthalten. Eine Zeitreihe wird dabei bei der späteren Steuerung des technischen Systems, welche durch das Lernverfahren erlernt wird, mit einem Klassifikator einer ersten oder einer zweiten Klasse zugeordnet und die Steuerung erfolgt in Abhängigkeit von der Zuordnung der Zeitreihe zur ersten oder zweiten Klasse.

In dem erfindungsgemäßen Lernverfahren ist eine Mehrzahl von Trainings-Zeitreihen als Trainingsdaten vorgegeben, wobei jede dieser Trainings-Zeitreihen einer ersten oder einer zweiten Klasse zugeordnet ist. Die Trainingsdaten umfassen somit vorab am technischen System gemessene Zustandsvektoren aus mehreren Zeitreihen, wobei für jede Zeitreihe deren Klassifizierung bekannt ist. Der bei der späteren Steuerung verwendete Klassifikator wird basierend auf den Trainings-Zeitreihen der Trainingsdaten gelernt, wodurch ein Klassifikator erhalten wird, der gemäß einer Modellfunktion, welche die Zustände eines Zustandsvektors als Variablen enthält, eine Zeitreihe der zweiten Klasse zuordnet, wenn die Modellfunktion für alle Zustandsvektoren der Zeitreihe ein erstes Schwellenkriterium erfüllt, und ansonsten die Zeitreihe der ersten Klasse zuordnet. Das Lernen dieses Klassifikators läuft erfindungsgemäß derart ab, dass eine gemäß einem oder mehreren Optimalitätskriterien optimale Modellfunktion ermittelt wird, wobei eines der Optimalitätskriterien die Modellfunktion für die Trainings-Zeitreihen der ersten Klasse im Hinblick auf eine geringe Abweichung von einer vorgegebenen Zielfunktion optimiert, welche ein Verhalten des technischen Systems für Zeitreihen der ersten Klasse beschreibt. Dabei wird bei der Ermittlung der Modellfunktion die Bedingung berücksichtigt, dass die Modellfunktion für alle Zustandsvektoren der Trainings-Zeitreihen der zweiten Klasse ein zweites Schwellenkriterium erfüllt.

Die Erfindung zeichnet sich dadurch aus, dass beim Trainieren des Klassifikators, der anschließend zur Steuerung des technischen Systems eingesetzt wird, eine Zielfunktion berücksichtigt wird, welche ein Verhalten des technischen Systems beschreibt. Auf diese Weise kann Vorwissen über Charakteristika des technischen Systems einfließen. Dieses Vorwissen kann ebenso bei der Festlegung des ersten und/oder zweiten Schwellenkriteriums berücksichtigt werden. Die Zielfunktion bzw. das Schwellenkriterium beruhen auf Expertenwissen über das technische System. Die Zielfunktion muss jedoch das Verhalten des technischen Systems nicht exakt beschreiben, sondern sie kann auch lediglich eine Approximation dieses Verhaltens repräsentieren. Basierend auf dieser Zielfunktion kann erfindungsgemäß mit einem geeigneten Optimalitätskriterium unter Berücksichtigung eines zweiten Schwellenkriteriums ein abhängig vom technischen System physikalisch bzw. technisch interpretierbarer Klassifikator geschaffen werden.

In einer besonders bevorzugten Ausführungsform des erfindungsgemäßen Verfahrens sind Zeitreihen der ersten Klasse dadurch charakterisiert, dass für zumindest einen Zustandsvektor einer jeweiligen Zeitreihe der ersten Klasse eine vorbestimmte Aktion in dem technischen System ausgelöst wird, und die Zeitreihen der zweiten Klasse sind dadurch charakterisiert, dass für keinen Zustandsvektor der jeweiligen Zeitreihe der zweiten Klasse die vorbestimmte Aktion ausgelöst wird. Eine Einteilung in solche Klassen wird insbesondere bei sicherheitsrelevanten Anwendungen verwendet, bei denen bereits durch einen einzelnen Zustandsvektor einer Zeitreihe eine sicherheitskritische Situation repräsentiert werden kann, welche zum Auslösen einer vorbestimmten Aktion führt.

In einer besonders bevorzugten Ausführungsform ist das erste Schwellenkriterium für einen Zustandsvektor dann erfüllt, wenn die Modellfunktion für den Zustandsvektor unterhalb eines ersten Schwellenwerts liegt. Vorzugsweise ist ferner das zweite Schwellenkriterium für einen Trainings-Zustandsvektor dann erfüllt, wenn die Modellfunktion für den Trainings-Zustandsvektor unterhalb eines zweiten Schwellenwerts liegt. Der zweite Schwellenwert ist dabei insbesondere kleiner und gegebenenfalls auch genauso groß wie der erste Schwellenwert.

In einer weiteren, besonders bevorzugten Ausführungsform des erfindungsgemäßen Verfahrens wird neben dem oben genannten Optimalitätskriterium im Hinblick auf eine geringe Abweichung zwischen Modell- und Zielfunktion ein weiteres Optimalitätskriterium bei der Berechnung der Modellfunktion berücksichtigt. Dieses weitere Optimalitätskriterium optimiert die Modellfunktion im Hinblick auf einen großen Abstand zwischen der Modellfunktion für Zustandsvektoren der Trainings-Zeitreihen der ersten Klasse und der Modellfunktion für Zustandsvektoren der Trainings-Zeitreihen der zweiten Klasse. Diese Variante hat den Vorteil, dass als Optimalitätskriterium nicht nur die Anpassung der Modellfunktion an eine Zielfunktion, sondern auch die Separierbarkeit der Zeitreihen in die beiden Klassen berücksichtigt wird.

Der in dem weiteren Optimalitätskriterium berücksichtigte Abstand ist dabei vorzugsweise definiert als das Minimum des maximalen Abstands eines (gegebenenfalls mehrdimensionalen) Funktionswerts der Modellfunktion für eine Trainings-Zeitreihe der ersten Klasse zu dem maximalen Funktionswert der Modellfunktion für alle Trainings-Zeitreihen der zweiten Klasse. Durch diese Definition wird sichergestellt, dass immer eine korrekte Klassifikation der Trainings-Zeitreihen gewährleistet ist. Als zusätzliches Optimalitätskriterium bei der Ermittlung der Modellfunktion können ferner die Gewichtungen der Zustände eines Zustandsvektors in der Modellfunktion berücksichtigt werden. Das zusätzliche Optimalitätskriterium ist dabei derart ausgestaltet, dass es die Modellfunktion im Hinblick auf geringe Gewichtungen der Zustände eines Zustandsvektors in der Modellfunktion optimiert. Hierdurch wird eine Regularisierung eingeführt, welche große Gewichte in der Modellfunktion bestraft.

In einer besonders bevorzugten Ausführungsform des erfindungsgemäßen Verfahrens wird die Modellfunktion als eine Funktion modelliert, welche linear von den Zuständen eines Zustandsvektors abhängt. Auf diese Weise kann die Modellfunktion besonders effizient mit geringem Rechenaufwand bestimmt werden.

In einer weiteren Ausführungsform wird die Modellfunktion basierend auf einem stochastischen Optimierungsverfahren, insbesondere basierend auf Simulated Annealing, ermittelt. In bestimmten Anwendungsfällen kann bei der Ermittlung der Modellfunktion auch ein Gradientenabstiegsverfahren, insbesondere die Methode der konjugierten Gradienten, zum Einsatz kommen. In einer weiteren, besonders bevorzugten Ausführungsform wird die Modellfunktion basierend auf einer Kombination aus stochastischem Optimierungsverfahren, insbesondere dem oben erwähnten Simulated Annealing, und einem Gradientenabstiegsverfahren, insbesondere der oben erwähnten Methode der konjugierten Gradienten, ermittelt. Hierdurch wird eine Optimierung der Zielfunktion in sehr kurzer Rechenzeit erreicht.

Das erfindungsgemäße Lernverfahren kann in beliebigen technischen Systemen eingesetzt werden. Insbesondere wird das erfindungsgemäße Verfahren zum Lernen der Steuerung einer Automatisierungsanlage verwendet. Dabei sind die Zeitreihen der ersten Klasse Zeitreihen, für welche eine vorbestimmte Aktion in der Automatisierungsanlage ausgelöst wird (z.B. die Notabschaltung der Anlage), und die Zeitreihen der zweiten Klasse sind Zeitreihen, für welche die vorbestimmte Aktion in der Automatisierungsanlage nicht ausgelöst wird.

Neben dem oben beschriebenen Verfahren zum Lernen der Steuerung eines technischen Systems umfasst die Erfindung auch ein entsprechendes Verfahren zur Steuerung des technischen Systems. Dieses Steuerungsverfahren beruht wiederum auf Zeitreihen, welche jeweils eine Mehrzahl von zeitlich aufeinander folgenden Zustandsvektoren umfassen, die eine oder mehrere Zustände des technischen Systems enthalten, wobei eine Zeitreihe bei der Steuerung des technischen Systems mit einem Klassifikator einer ersten oder einer zweiten Klasse zugeordnet wird und die Steuerung in Abhängigkeit von der Zuordnung der Zeitreihe zur ersten oder zweiten Klasse erfolgt, wobei der Klassifikator mit dem oben beschriebenen Lernverfahren gelernt wurde.

Darüber hinaus betrifft die Erfindung ein Computerprogrammprodukt mit einem auf einem maschinenlesbaren Träger gespeicherten Programmcode zur Durchführung jeder Variante der oben beschriebenen erfindungsgemäßen Verfahren, wenn das Programm auf einem Rechner abläuft.

Ausführungsbeispiele der Erfindung werden nachfolgend anhand der beigefügten Figuren detailliert beschrieben.

Es zeigen:

Fig. 1 ein Diagramm, welches die erfindungsgemäße Anpassung einer Modellfunktion an eine Zielfunktion für Zeitreihen zum Auslösen einer Aktion in einem beispielhaften technischen System wiedergibt;

Fig. 2 ein Diagramm, welches beispielhaft das erfindungsgemäße Schwellenkriterium für eine Modellfunktion für Zeitreihen verdeutlicht, welche nicht zum Auslösen einer Aktion in dem beispielhaften technischen System führen;

Fig. 3 ein Diagramm, welches einen minimalen Abstand zwischen Funktionswerten einer Modellfunktion für Zeitreihen zum Auslösen einer Aktion in dem beispielhaften technischen System und einer Schwelle wiedergibt, wobei der minimale Abstand in einer Ausführungsform der Erfindung bei der Optimierung der Modellfunktion berücksichtigt wird; und

Fig. 4 ein dreidimensionales Diagramm, welches die Abhängigkeit von Gewichten einer linearen Approximation einer Modellfunktion von dem minimalen Abstand gemäß Fig. 3 für eine Ausführungsform der Erfindung wiedergibt.

Die nachfolgend beschriebenen Ausführungsformen werden illustrativ an einem beispielhaften technischen System beschrieben, welches insbesondere eine Automatisierungsanlage sein kann. Die Zeitreihen, welche zur Steuerung des technischen Systems verarbeitet werden, liegen dabei als eine Mehrzahl von zeitlich aufeinander folgenden Zustandsvektoren vor, wobei jeder Zustandsvektor eine entsprechend im technischen System gemessene Zustandsgröße darstellt. Ziel des erfindungsgemäßen Verfahrens ist es dabei, basierend auf vorgegebenen Trainings-Zeitreihen eine Steuerung des technischen Systems derart zu lernen, dass sie im späteren Realbetrieb immer eine vorbestimmte Aktion richtig auslöst. Die Trainings-Zeitreihen sind dabei binär klassifiziert in Zeitreihen einer positiven Klasse, bei denen für zumindest einen Zeitpunkt die Aktion ausgelöst wurde und welche den Zeitreihen der ersten Klasse gemäß Anspruch 1 entsprechen, und Zeitreihen einer negativen Klasse, bei denen zu keinem Zeitpunkt die Aktion ausgelöst wurde und welche den Zeitreihen gemäß der zweiten Klasse im Sinne von Anspruch 1 entsprechen.

Allgemein wird von einem Trainingsdatensatz von N Zeitreihen ausgegangen, wobei jede Zeitreihe entweder zu einer positiven oder einer negativen Klasse gehört. Im Folgenden wird eine Zeitreihe als $\mathbf{s} = (\mathbf{x}_1,...\mathbf{x}_m)$ bezeichnet, wobei die m Elemente der Zeitreihe p-dimensionale reellwertige Vektoren $x_t \in \mathfrak{R}^P, t = 1,...,m$ sind. Jeder Zeitreihe ist ein binärer Label $l \in \{L^+, L^-\}$ zugeordnet, der die positive bzw. die negative Klasse bezeichnet. Formal ist somit der Trainingsdatensatz gegeben durch $\{(\mathbf{s}_i, l_i)|i = 1,...,N\}$, wobei die einzelnen Zeitreihen $\mathbf{S}_i$ unterschiedliche Längen aufweisen können.

Zusätzlich wird eine Klassifikationsfunktion c betrachtet, welche die Elemente einer Zeitreihe entweder der positiven oder der negativen Klasse zuweisen. Die Klassifikationsfunktion lautet somit wie folgt: $c:x_t \rightarrow \{L^+, L^-\}$. Eine Zeitreihe der negativen Klasse ist dadurch charakterisiert, dass alle Vektoren der Zeitreihe der negativen Klasse zugewiesen sein müssen und Misklassifikationen nicht zugelassen sind. Dieses Prinzip entspricht dem aus dem Stand der Technik bekannten Multi-Instance-Learning MIL, wobei dieses Lernen üblicherweise nicht für Zeitreihen verwendet wird.

Der oben beschriebene Klassifikator c soll erfindungsgemäß mit den Trainingsdaten geeignet trainiert werden, so dass durch den Klassifikator für neue Zeitreihen richtige Entscheidungen getroffen werden. Ein wichtiges Kriterium ist dabei die Interpretierbarkeit der Klassifikatorfunktion c. Ein trainierter Klassifikator kann nur dann im Realbetrieb eingesetzt werden, wenn die Logik des Klassifikators basierend auf physikalischem bzw. technischem Wissen erklärt werden kann. Ein Ziel des erfindungsgemäßen Verfahrens könnte beispielsweise das Trainieren eines Klassifikators sein, der automatisch entscheidet, ob eine Notabschaltung einer Anlage erfolgen soll. Ein Klassifikator, der eine physikalische Größe in dieser Anlage, beispielsweise einen vorhergesagten Druck, mit einer kritischen Schwelle vergleicht, wird in einer solchen Anlagen gegenüber einem solchen Klassifikator bevorzugt, der nur von der Position eines Eingabevektors relativ zu einer separierenden Hyperebene in einem multidimensionalen Raum abhängt.

Um physikalisches bzw. technisches Wissen über das betrachtete technische System zu berücksichtigen, wird erfindungsgemäß zum Trainieren des Klassifikators eine Zielfunktion vorgegeben, welche auf solchem Wissen beruht. Die Zielfunktion kann beispielsweise das erwartete Verhalten von Zustandsgrößen im Falle einer Notabschaltung einer technischen Anlage sein. Die Zielfunktion muss dabei nicht zwangsläufig exakt bestimmt sein. Entscheidend ist lediglich, dass in die Zielfunktion Expertenwissen über das technische System einfließt. Von der Zielfunktion kann beispielsweise lediglich ein einzelner Zielwert einer physikalischen Größe vorab bekannt sein und der Rest der Zielfunktion kann dann mit Hilfe von Expertenwissen geeignet modelliert sein.

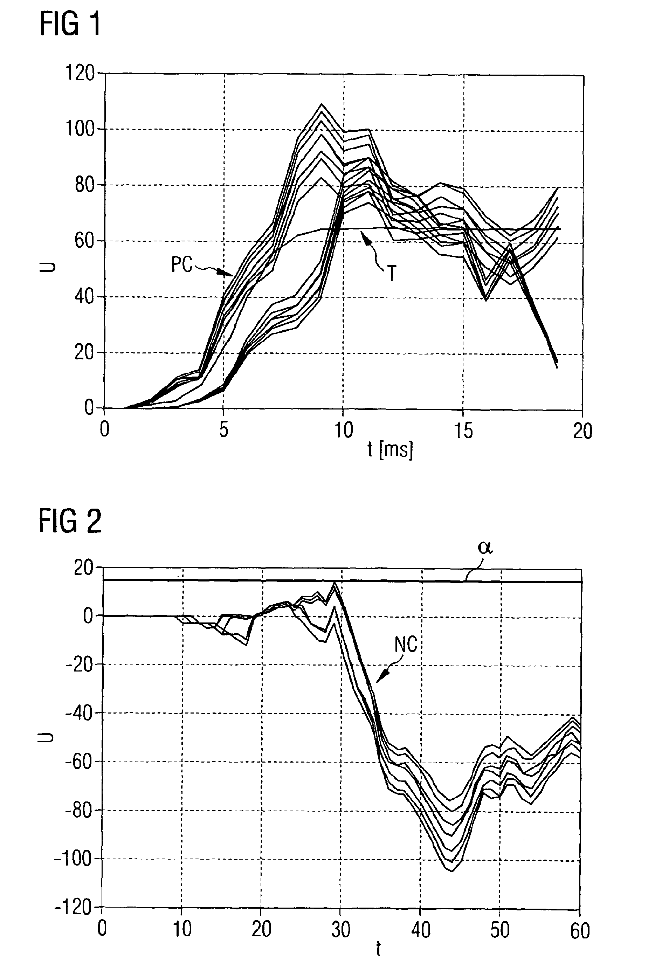

Fig. 1 zeigt für ein beispielhaftes technisches System eine modellierte Zielfunktion T. Die Zielfunktion hängt dabei von den Zustandsvektoren, welche Messgrößen im technischen System repräsentieren, zu den verschiedenen Zeitpunkten t der Zeitreihe ab. Die Zielfunktion modelliert in den nachfolgenden Ausführungsformen eine physikalische Messgröße u. Der Wert der Messgröße ist in der Regel nicht direkt messbar und/oder erst lange nach Eintreten eines kritischen Systemzustands bekannt. In dem Beispiel in Fig. 1 besitzt die Zielfunktion T einen sigmoiden Verlauf, der im Ursprung beginnt und sich ab ca. 10ms asymptotisch einem Maximum nähert, womit die Kurve den erwarteten Verlauf der Größe u in dem beispielhaften technischen System beschreibt. Neben der Zielfunktion T ist in dem Diagramm der Fig. 1 ferner eine Vielzahl von Ausgaben einer Modellfunktion für verschiedene Mess-Zeitreihen wiedergegeben, wobei die Modellfunktion mit der nachfolgend erläuterten Ausführungsform des erfindungsgemäßen Verfahrens bestimmt wurde. Die Ausgaben der Modellfunktion wurden dabei für Trainings-Zeitreihen der positiven Klasse (d.h. vorbestimmte Aktion wird ausgelöst) ermittelt und stellen eine Schar von Kurven dar, welche als PC bezeichnet ist. Man erkennt, dass der Verlauf der Ausgaben PC im Wesentlichen dem Verlauf der Zielfunktion T folgt.

Basierend auf der oben beschriebenen vorgegebenen Zielfunktion kann ein reines Regressionsproblem gelöst werden. Gemäß diesem Problem wird nach einer Modellfunktion g gesucht, deren Ausgabe $g(\mathbf{x}_t)$ gut die Zielfunktion im Sinne eines minimalen mittleren quadratischen Fehlers fittet. Durch die Wahl einer geeigneten Schwelle $\theta$ können die beiden Klassen $L^+$ und $L^-$ separiert werden und der Klassifikator c kann wie folgt definiert werden:

$$c : \mathbf{x}_t \rightarrow \begin{cases} L^+ & falls \ g(\mathbf{x}_t) \geq \theta \\ L^- & falls \ g(\mathbf{x}_t) < \theta \end{cases} \qquad (1)$$

Erfindungsgemäß ist die richtige Klassifikation bei der Verwendung des Klassifikators im Realbetrieb entscheidend und die obige Regression wird hauptsächlich dazu verwendet, um ein Modell zu bevorzugen, welches physikalisch bzw. technisch plausible Ausgaben erzeugt. Deshalb werden in den nachfolgend beschriebenen Varianten des erfindungsgemäßen Verfahrens die Regression und die Klassifikation in einem gemeinsamen Optimierungsansatz berücksichtigt.

Wie oben dargelegt, ist das Erfordernis für Zeitreihen der negativen Klasse, dass alle Zustandsvektoren der Zeitreihe in die negative Klasse klassifiziert werden. Unter der Verwendung der obigen Gleichung (1) bedeutet dies, dass die Ausgabe der Modellfunktion unterhalb einer Schwelle bleiben muss. Dies wird als eine Bedingung in der Optimierung berücksichtigt. Fig. 2 verdeutlicht diese Bedingung basierend auf dem betrachteten beispielhaften technischen System. In Fig. 2 ist die Messgröße u für eine Mehrzahl von Zeitreihen in Abhängigkeit von den Zustandsvektoren der jeweiligen Zeitreihen zu den einzelnen Zeitpunkten t wiedergegeben. Als Schwelle für die Messgröße u wurde $\alpha$ = 18 festgelegt. Die in Fig. 2 gezeigten Kurven entsprechen dabei den Ausgaben von einer erfindungsgemäß ermittelten Modellfunktion g für die einzelnen Trainings-Zeitreihen der negativen Klasse (d.h. vorbestimmte Aktion wird nicht ausgelöst). Diese Ausgaben bilden eine Kurvenschar, welche als NC bezeichnet ist. Man erkennt, dass die Schwelle $\alpha$ geeignet gewählt ist, so dass für alle negativen Zeitreihen die Schwelle nicht überschritten wird und somit die vorbestimmte Aktion nicht ausgelöst wird.

Zur Bestimmung der Modellfunktion zur Modellierung der positiven bzw. negativen Klasse wird ein Maß für die Trennbarkeit der Klassen eingeführt. Im Folgenden wird dabei $o_{\mathbf{max}}^{-}$ als die maximale Ausgabe der Modellfunktion für alle Zeitreihen der negativen Klasse bezeichnet. Das heißt, $o_{\mathbf{max}}^{-}$ ist wie folgt definiert:

$$o_{\max}^{-} := \max\big(g(\mathbf{x}_t)\big|\,\forall \mathbf{x}_t \text{ von allen Zeitreihen mit dem Label } L^{-}\big)$$

Eine positive Zeitreihe **s** wird korrekt klassifiziert, falls folgende Distanz *d*(**s**) positiv ist:

$$d(\mathbf{s}) := \max\big(g(\mathbf{x}_t) - o_{\max}^{-}\big|\,\forall \mathbf{x}_t \text{ von } \mathbf{s}\big)$$

Falls die positive Klassifikation vor einem vorbestimmten Zeitpunkt auftreten muss, d.h. vor dem Zeitpunkt $t = t^*$, kann die Definition von $d(\mathbf{s})$ leicht modifiziert werden, um nur

Vektoren $\mathbf{x}_t, t = 1,...,t^*$ zu betrachten.

Um alle Zeitreihen der positiven Klasse korrekt zu klassifizieren, muss das Minimum der obigen Distanzen $d(\mathbf{s})$ positiv sein, wobei das Minimum der Distanzen wie folgt definiert ist:

$$d_{\min} := \min\big(d(\mathbf{s})\big|\,\forall \mathbf{s} \text{ mit Label } L^{+}\big) \qquad (2)$$

Bevor das zu lösende Optimierungsproblem genannt wird, werden zunächst einige Notationen eingefügt. Der Vektor $\mathbf{x}_t$, der den

Zustandsvektor zu einem Zeitpunkt t in einer Trainings-Zeitreihe darstellt, wird als 1×p Zeilenvektor definiert. Auf diese Weise kann eine Trainings-Zeitreihe mit m Zustandsvektoren als eine mxp Matrix geschrieben werden. Im Folgenden wird als **P** die qxp Matrix bezeichnet, welche durch eine einfache Verknüpfung der Matrizen von allen positiven Trainings-Zeitreihen konstruiert ist, wobei q die Gesamtanzahl der Zustandsvektoren von allen positiven Trainings-Zeitreihen ist. Auf die gleiche Weise wird **N** als eine $r\times p$ Matrix für alle Zustandsvektoren von allen negativen Trainings-Zeitreihen definiert.

Die oben beschriebene Zielfunktion T mit q Werten für die entsprechenden Zustandsvektoren der positiven Zeitreihen wird im Folgenden als $q\times 1$ Vektor geschrieben und als **y** bezeichnet. Bei der Zielfunktion werden somit nicht die negativen Zeitreihen betrachtet, da diese Zeitreihen nur die Bedingung erfüllen müssen, dass deren Ausgaben gemäß der Modellfunktion unter einer festen Schwelle bleiben. Diese Schwelle wird als $\alpha \in R$ bezeichnet und geeignet basierend auf Expertenwissen festgelegt.

Im Folgenden wird das Optimierungsproblem basierend auf linearen Modellen gelöst, d.h. die zu optimierende Modellfunktion wird als linear angenommen. Somit wird das Modell vollständig durch einen Gewichtungsvektor $\mathbf{w} \in R^p$ definiert, der ein $p\times 1$ Spaltenvektor ist. Die zu modellierende lineare Modellfunktion wird dann wie folgt berechnet:

$$g(\mathbf{x}_t) := \mathbf{x}_t \mathbf{w}$$

Die Erfindung ist nicht auf die Verwendung eines linearen Modells für die Modellfunktion beschränkt, es können auch beliebige andere Modelle verwendet werden. Lineare Modelle haben jedoch den Vorteil, dass sie einfach zu interpretieren sind und die Modelle sehr robust sind (d.h. eine geringe Varianz aufweisen). Insbesondere wenn die Menge an Trainingsdaten gering ist, werden mit linearen Modellen gute Ergebnisse erzielt.

Das Optimierungsproblem, welches gemäß einer Variante der Erfindung gelöst wird, besteht in einer Minimierung einer Fehlerfunktion E und lautet wie folgt:

$$\min_{\mathbf{w}} \left( \underbrace{\|\mathbf{Pw} - \mathbf{y}\|^2 + \lambda\|\mathbf{w}\|^2 - \mu d_{\min}}_{E(\mathbf{w})} \right) \; so \; dass \; \mathbf{Nw} \leq \alpha \qquad (3)$$

Der Term $\|\mathbf{Pw\text{-}y}\|^2$ der Fehlerfunktion entspricht einem linearen Fit basierend auf dem quadratischen Fehler zwischen Modellfunktion und Zielfunktion, wobei dieser Term gegebenenfalls auch normalisiert werden kann, indem er durch q, d.h. der Anzahl der Trainings-Zeitreihen der positiven Klasse, geteilt wird. Der Regularisierungsterm $\lambda\|\mathbf{w}\|^2$ mit $\lambda > 0$ bestraft hohe Gewichte. In der hier beschriebenen Variante der Erfindung wird bei der Optimierung noch der weitere Term $-\mu d_{\min}$, $\mu > 0$ verwendet, der eine gute Klassentrennbarkeit belohnt. Der feste Parameter $\mu$ kann verwendet werden, um einen Ausgleich zwischen der Performanz der Regression und der Klassifikation zu schaffen. Im Falle, dass der erste Term in dem Optimierungsproblem der Gleichung (3) normalisiert wird (d.h. durch q geteilt wird), haben sich für die oben beschriebenen Zeitreihen die Werte $\lambda=1$ und $\mu=30$ als praktikabel erwiesen. Die Werte sind jedoch anwendungsspezifisch und können variiert werden. Gegebenenfalls kann in einer Variante der Erfindung auch A und/oder $\mu$ auf 0 gesetzt werden, wodurch die Lösung des Optimierungsproblems vereinfacht wird.

Wird der obige Parameter $\mu$ groß gewählt, wird die Optimierung hauptsächlich im Hinblick auf eine gute Separierbarkeit in positive und negative Klassen durchgeführt und das Fitten der Modellfunktion an die Zielfunktion ist von untergeordneter Bedeutung. Dies kann jedoch zu Modellen führen, welche basierend auf dem physikalischen bzw. technischen Wissen über das technische System nicht begründbar sind. $\mu$ sollte deshalb nicht zu groß gewählt werden. Eine weitere entscheidende Bedingung in dem Optimierungsproblem der Gleichung (3) ist die Bedingung, dass die Ausgaben der Modellfunktion für alle negativen Trainings-Zeitreihen unterhalb der Schwelle $\alpha$ liegen. Das heißt, es muss gelten $\mathbf{Nw} \leq \alpha$, wobei $\alpha$ der gegebene Schwellenwert $\alpha$ ist, der in einen $r \times 1$ Vektor für alle negativen Trainings-Zeitreihen kopiert wird.

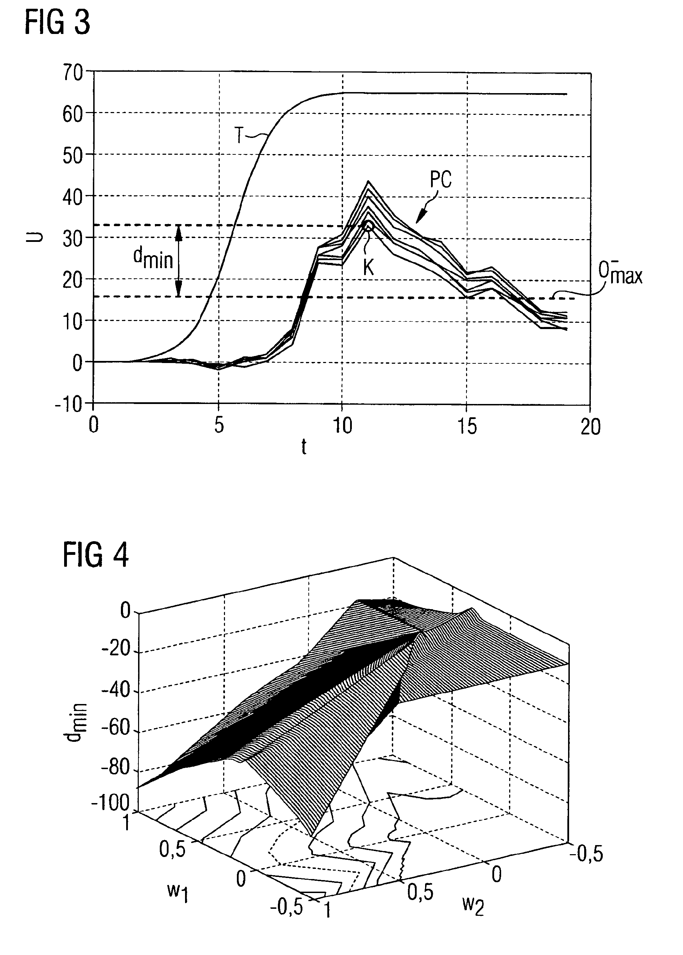

Der Vorteil der Verwendung der obigen minimalen Distanz $d_{\min}$ besteht darin, dass selbst dann, wenn einige Zeitreihen eine größere Abweichung von der Zielfunktion aufweisen, das Modell immer noch versucht, auch diese Zeitreihen korrekt zu klassifizieren. Fig. 3 verdeutlicht nochmals die Verwendung der Größe $d_{\min}$. In Fig. 3 ist ein Diagramm gezeigt, welches beispielhaft Ausgaben einer erfindungsgemäß ermittelten Modellfunktion für mehrere Trainings-Zeitreihen der positiven Klasse zeigt. Diese Ausgaben sind wiederum als Kurvenschar PC bezeichnet. Ferner ist die Zielfunktion T aus Fig. 1 ersichtlich. Der minimale Abstand $d_{\min}$ errechnet sich aus der Differenz zwischen dem kleinsten Maximalwert der Kurvenschar PC, der durch den Kreis K angedeutet ist, und dem im Vorangegangenen beschriebenen Wert $\overline{O}_{\max}$, der das Maximum der Ausgabe der Modellfunktion für alle Trainings-Zeitreihen der negativen Klasse ist.

Zusammenfassend werden in den im Vorangegangenen beschriebenen Varianten der Erfindung folgende Schritte ausgeführt. Es ist zunächst ein Trainingsdatensatz $\{(\mathbf{s}_i, l_i)|i=1,...,N\}$ einer

Mehrzahl von Zeitreihen für das betrachtete technische System vorgegeben. Ferner ist eine Zielfunktion $\mathbf{y}$ für die Zustandsvektoren der positiven Zeitreihen vorgegeben sowie ein Schwellenwert $\alpha$ für Zustandsvektoren der negativen Zeitreihe. Die Zielfunktion und der Schwellenwert beruhen dabei auf Expertenwissen, welche physikalische bzw. technische Eigenschaften des technischen Systems berücksichtigen. In diese Größen fließt somit technisches bzw. physikalisches Wissen über das Verhalten des technischen Systems ein. Anschließend wird das Optimierungsproblem gemäß obiger Gleichung (3) gelöst. Man erhält somit eine Modellfunktion, welche die Zustände eines Zustandsvektors als Variablen enthält. Diese Modellfunktion kann dann schließlich als Klassifikator für neue Zeitreihen eingesetzt werden, wobei die Klassifikation basierend auf obiger Gleichung (1) abläuft. Insbesondere wird hierbei der Schwellenwert $\theta$ der Klassifikation im Realbetrieb größer als der Schwellenwert $\alpha$ gewählt, der beim Trainieren des Klassifikators verwendet wird.

Im Folgenden wird erläutert, mit welchen Methoden das obige Optimierungsproblem gemäß Gleichung (3) gelöst werden kann. In einer Variante des erfindungsgemäßen Verfahrens wird zur Lösung des Optimierungsproblems eine stochastische Optimierung basierend auf Simulated Annealing SA verwendet. Die Methode des Simulated Annealing ist dabei hinlänglich aus dem Stand der Technik bekannt. Der Grund für die Verwendung von SA zur Lösung der Gleichung (3) besteht darin, dass der $d_{\min}$-Term in Gleichung (3) nicht überall differenzierbar ist und lokale Minima verursachen kann. Beispielhaft ist in Fig. 4 ein Plot des $d_{\min}$-Terms für eine erfindungsgemäß ermittelte zweidimensionale lineare Modellfunktion mit Gewichten $w_1$ und $w_2$ gezeigt. Man erkennt aus Fig. 4, dass $d_{\min}$ in der Tat nicht differenzierbare Spitzen aufweist. Nachfolgend wird in der Form eines Pseudocodes das in einer Ausführungsform der Erfindung verwendete SA-Verfahren skizziert:

```
Eingabe: w₀, T₀, n_max, n_success
Ausgabe: optimale Gewichte w
   T=T₀, w=w₀
   Schleife 1: Solange T>0
      i=0;      //Zählschritte für jeden Temperatur-Level
      k=0;      //Anzahl an erfolgreichen Zählschritten für jeden
                Level
   Schleife 2: Solange k<n_success
      w_new=CHANGE(w);
      success=E(w_new)<E(w)
```

$$\text{oder} \quad \exp\left(\frac{E(\mathbf{w}) - E(\mathbf{w}_{new})}{T}\right) > random[0,1)$$

//„random" ist eine Zufallszahl im Intervall $[0,1)$

```
      Falls success
         w=w_new   // Akzeptiere Schritt
         k=k+1   // Zähle erfolgreiche Schritte
      Ende Falls
      i=i+1;
      Falls i==n_max
         STOP   // maximale Anzahl an Iterationen erreicht
      Ende Falls
   Ende Schleife 2
   T=REDUCE(T);   //Vermindere Temperatur nach vorgegebenem
                  Schema
   Ende Schleife 1.
```

Gemäß dem obigen Pseudocode wird zunächst ein anfängliches Modell $\mathbf{w}_0$ in der Form eines anfänglichen Gewichtungsvektors vorgegeben. Das Modell kann zufällig gewählt sein. Ebenso wird eine anfängliche Temperatur $T_0$ vorgegeben, welche im Regelfall groß ist, um eine breite Exploration des Suchraums zu Beginn des Verfahrens sicherzustellen. Die Maximalanzahl der Suchschritte auf jedem Temperatur-Level ist $n_{max}$ (z.B. einige tausend). $n_{success}$ bezeichnet die Anzahl an Schritten, welche auf jedem Temperatur-Level erfolgreich sein müssen, bevor die Temperatur vermindert wird. Das entscheidende Merkmal des SA-Verfahrens besteht darin, dass ein Suchschritt nicht nur dann akzeptiert wird, wenn er zu einem besseren (d.h. geringeren) Fehler E führt, sondern auch mit einer gewissen Wahrscheinlichkeit Suchschritte zugelassen werden, selbst wenn sie zu einem größeren Fehler führen. Die Wahrscheinlichkeit, Suchschritte mit einem größeren Fehler zu akzeptieren, nimmt mit abnehmender Temperatur ab. Mit dem SA-Verfahren kann erreicht werden, dass die Suche nicht in einem lokalen Minimum stecken bleibt. Die in dem obigen Pseudocode enthaltene Funktion CHANGE implementiert die Suchschritte und wird je nach Problemstellung geeignet gewählt. Es sind dabei aus dem Stand der Technik Methoden bekannt, wie die Funktion CHANGE implementiert sein kann.

Prinzipiell kann der Gradient der Fehlerfunktion E aus Gleichung (3) durch finite Differenzen approximiert werden und die Richtung des steilsten Abstiegs für eine bestimmte Anzahl der ansonsten zufälligen Suchschritte verwendet werden. Hierdurch wird zwar die Effizienz erhöht, jedoch wird nicht die Konvergenz hin zu einer optimalen Lösung verbessert. Der Grund für dieses Verhalten liegt an der Form der in Gleichung (3) definierten Fehlerfunktion E. Ohne $d_{min}$ ist der Rest der Funktion E eine konvexe Funktion mit einem globalen, jedoch nicht notwendigerweise einzigen Minimum. Durch die Überlagerung mit $d_{min}$ wird eine irreguläre Form der Funktion E herbeigeführt, so dass ein Gradientenabstiegsverfahren zu schlechten Ergebnissen führen kann. Jedoch wird der Abstand $d_{min}$ hauptsächlich zur Feineinstellung des Modells verwendet. Das heißt, $\mu$ in Gleichung (3) wird derart gewählt, dass immer noch eine akzeptable Anpassung der Modellfunktion an die Zielfunktion erfolgt. Demzufolge wird in einer Ausführungsform der Erfindung zunächst ein Gradientenabstiegsverfahren bei der Optimierung verwendet, um schnell zu Beginn der Optimierung der konvexen Funktion zu folgen. Anschließend werden dann stochastische Suchschritte gemäß der oben beschriebenen SA-Methode durchgeführt, um lokal das Optimum zu finden. Es wird hierdurch der Vorteil erreicht, dass ein langwieriges Abkühlen mit der Funktion REDUCE(T) vermieden wird und die Feineinstellung der Optimierung basierend auf der SA-Methode bei einer niedrigeren Temperatur $T_0$ anfangen kann, nachdem das Gradientenabstiegsverfahren bereits in eine Region mit geringen Fehlern geführt hat. Auf diese Weise wird die Optimierung beschleunigt.

In der soeben beschriebenen Variante der Optimierung wird somit das Gradientenabstiegsverfahren mit der SA-Methode kombiniert. Dabei wird wiederum der Gewichtungsvektor **w** anfangs zufällig initialisiert. Schließlich wird das Gradientenabstiegsverfahren für die Fehlerfunktion E(**w**) so lange durchgeführt, bis gemäß einem vorgegebenen Kriterium keine Verbesserung mehr erreicht wird. Dann erfolgt die weitere Optimierung mit der SA-Methode bei einer niedrigen Temperatur, z.B. für $T_0=0,1$.

Wie sich aus den obigen Ausführungen ergibt, ermöglicht das erfindungsgemäße Verfahren basierend auf Trainingszeitreihen, welche in positive und negative Klassen eingeteilt sind, das Lernen einer Steuerung eines beliebigen technischen Systems. Das Lernen erfolgt dabei durch die Lösung eines Optimierungsproblems, welches in einer speziellen Variante in der obigen Gleichung (3) wiedergegeben ist. Dabei fließt Wissen über die spezifische Anwendung durch eine entsprechende Definition einer Zielfunktion und einer entsprechenden Schwelle zur Separation der Klassen ein. Das Verfahren kann für beliebige technische Systeme eingesetzt werden, deren Steuerung auf einer binären Klassifikation beruht. Beispielsweise kann das Verfahren zur Überwachung einer Automatisierungsanlage verwendet werden, wobei eine vorbestimmte Aktion dann ausgelöst wird, wenn der Klassifikator eine gemessene Zeitreihe der positiven Klasse zuordnet, und ansonsten die vorbestimmte Aktion nicht durchgeführt wird.

**Patentansprüche**

1. Verfahren zum rechnergestützten Lernen einer Steuerung eines technischen Systems basierend auf Zeitreihen, welche jeweils eine Mehrzahl von zeitlich aufeinander folgenden Zustandsvektoren umfassen, die eine oder mehrere Zustände des technischen Systems enthalten, wobei eine Zeitreihe bei der Steuerung des technischen Systems mit einem Klassifikator einer ersten oder einer zweiten Klasse (PC, NC) zugeordnet wird und die Steuerung in Abhängigkeit von der Zuordnung der Zeitreihe zur ersten oder zweiten Klasse (NC) erfolgt, wobei:

   - eine Mehrzahl von Trainings-Zeitreihen als Trainingsdaten vorgegeben sind, wobei jede Trainings-Zeitreihe einer ersten oder einer zweiten Klasse (NC) zugeordnet ist;
   - der Klassifikator basierend auf den Trainingsdaten gelernt wird, wodurch ein Klassifikator erhalten wird, der gemäß einer Modellfunktion, welche die Zustände eines Zustandsvektors als Variablen enthält, eine Zeitreihe der zweiten Klasse (NC) zuordnet, wenn die Modellfunktion für alle Zustandsvektoren der Zeitreihe ein erstes Schwellenkriterium erfüllt, und ansonsten die Zeitreihe der ersten Klasse (PC) zuordnet; das Lernen des Klassifikators derart abläuft, dass die Modellfunktion basierend auf einem oder mehreren Optimalitätskriterien ermittelt wird, **dadurch gekennzeichnet, dass** eines der Optimalitätskriterien die Modellfunktion für die Trainings-Zeitreihen der ersten Klasse (PC) im Hinblick auf eine geringe Abweichung von einer vorgegebenen Zielfunktion (T), welche ein Verhalten des technischen Sys- tems für Zeitreihen der ersten Klasse (PC) beruhend auf Expertenwissen beschreibt, optimiert, wobei bei der Ermittlung der Modellfunktion die Bedingung berücksichtigt wird, dass die Modellfunktion für alle Zustandsvektoren der Trainings-Zeitreihen der zweiten Klasse (NC) ein zweites Schwellenkriterium erfüllt.

2. Verfahren nach Anspruch 1, wobei die Zeitreihen der ersten Klasse (PC) dadurch charakterisiert sind, dass für zumindest einen Zustandsvektor einer jeweiligen Zeitreihe der ersten Klasse (PC) eine vorbestimmte Aktion in dem technischen System ausgelöst wird, und die Zeitreihen der zweiten Klasse (NC) dadurch charakterisiert sind, dass für keinen Zustandsvektor der jeweiligen Zeitreihe der zweiten Klasse (NC) die vorbestimmte Aktion ausgelöst wird.

3. Verfahren nach Anspruch 1 oder 2, wobei das erste Schwellenkriterium für einen Zustandsvektor erfüllt ist, wenn die Modellfunktion für den Zustandsvektor unterhalb eines ersten Schwellenwerts liegt, und/oder das zweite Schwellenkriterium für einen Trainings-Zustandsvektor erfüllt ist, wenn die Modellfunktion für den Trainings-Zustandsvektor unterhalb eines zweiten Schwellenwerts ($\alpha$) liegt.

4.  Verfahren nach Anspruch 3, wobei der zweite Schwellenwert ($\alpha$) kleiner oder genauso groß wie der erste Schwellenwert ist.

5.  Verfahren nach einem der vorhergehenden Ansprüche, wobei ein weiteres Optimalitätskriterium die Modellfunktion im Hinblick auf einen großen Abstand ($d_{min}$) zwischen der Modellfunktion für Zustandsvektoren der Trainings-Zeitreihen der ersten Klasse (PC) und der Modellfunktion für Zustandsvektoren der Zeitreihen der zweiten Klasse (NC) optimiert.

6.  Verfahren nach Anspruch 5, wobei der Abstand definiert ist als das Minimum ($d_{min}$) des maximalen Abstands eines Funktionswerts der Modellfunktion für eine Trainings-Zeitreihe der ersten Klasse (PC) zu dem maximalen Funktionswert der Modellfunktion für alle Trainings-Zeitreihen der zweiten Klasse (NC).

7.  Verfahren nach einem der vorhergehenden Ansprüche, wobei ein zusätzliches Optimalitätskriterium die Modellfunktion im Hinblick auf geringe Gewichtungen der Zustände eines Zustandsvektor in der Modellfunktion optimiert.

8.  Verfahren nach einem der vorhergehenden Ansprüche, wobei die Modellfunktion als eine Funktion modelliert wird, welche linear von den Zuständen eines Zustandvektors abhängt.

9.  Verfahren nach einem der vorhergehenden Ansprüche, wobei die Modellfunktion basierend auf einem stochastischen Optimierungsverfahren, insbesondere basierend auf Simulated Annealing, ermittelt wird.

10. Verfahren nach einem der vorhergehenden Ansprüche, wobei die Modellfunktion basierend auf einem Gradientenabstiegsverfahren, insbesondere basierend auf der Methode der konjugierten Gradienten, ermittelt wird.

11. Verfahren nach einem der vorhergehenden Ansprüche, bei dem die Modellfunktion basierend auf einer Kombination aus stochastischem Optimierungsverfahren, insbesondere Simulated Annealing, und Gradientenabstiegsverfahren, insbesondere der Methode der konjugierten Gradienten, ermittelt wird.

12. Verfahren nach einem der vorhergehenden Ansprüche, bei dem die Steuerung einer Automatisierungsanlage gelernt wird, wobei die Zeitreihen der ersten Klasse (PC) Zeitreihen sind, für welche eine vorbestimmte Aktion in der Automatisierungsanlage ausgelöst wird, und die Zeitreihen der zweiten Klasse (NC) Zeitreihen sind, für welche die vorbestimmte Aktion in der Automatisierungsanlage nicht ausgelöst wird.

13. Verfahren zur Steuerung eines technischen Systems basierend auf Zeitreihen, welche jeweils eine Mehrzahl von zeitlich aufeinander folgenden Zustandsvektoren umfassen, die eine oder mehrere Zustände des technischen Systems enthalten, wobei eine Zeitreihe bei der Steuerung des technischen Systems mit einem Klassifikator einer ersten oder einer zweiten Klasse (PC, NC) zugeordnet wird und die Steuerung in Abhängigkeit von der Zuordnung der Zeitreihe zur ersten oder zweiten Klasse (NC) erfolgt, wobei der Klassifikator mit einem Verfahren nach einem der vorhergehenden Ansprüche gelernt ist.

14. Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner abläuft.

**Claims**

1.  Method for the computer-assisted learning of the control of a technical system based on time series, in each case comprising a multiplicity of temporally successive state vectors which contain one or more states of the technical system, wherein in the case of control of the technical system a time series is assigned a classifier of a first or a second class (PC, NC), and the control takes place depending on the assignment of the time series to the first or second class (NC), wherein:

    - a multiplicity of training time series are prescribed as training data, wherein each training time series is assigned to a first or second class (NC);
    - the classifier based on the training data is learned, by means of which a classifier is obtained, which assigns a time series to the second class according to a model function which contains the states of a state vector as variables, if the model function for all state vectors of the time series meets a first threshold criterion, and otherwise assigns the time series to the first class (PC); the learning of the classifier proceeds in such a way that the model function based on one or more optimality criteria is determined,

**characterised in that** one of the optimality criteria optimises the model function for the training time series of the first class (PC) as regards a minimal deviation from a prescribed target function which describes a behaviour of the technical system for time series of the first class based on expert knowledge, wherein upon determining the model function account is taken of the condition that the model function meets a second threshold criterion for all state vectors of the training time series of the second class (NC).

2. Method according to claim 1, wherein the time series of the first class (PC) are **characterised in that** for at least one state vector of a respective time series of the first class (PC), a predefined action is initiated in the technical system, and the time series of the second class (NC) are **characterised in that** the predefined action is initiated for no state vector of the respective time series of the second class (NC).

3. Method according to claim 1 or 2, wherein the first threshold criterion for a state vector is met if the model function for the state vector lies below a first threshold value, and/or the second threshold criterion for a training state vector is met if the model function for the training state vector is below a second threshold value ($\alpha$).

4. Method according to claim 3, wherein the second threshold value ($\alpha$) is smaller than or equal to the first threshold value.

5. Method according to one of the preceding claims, wherein a further optimality criterion optimises the model function in respect of a large distance ($d_{min}$) between the model function for state vectors of the training time series of the first class (PC) and the model function for state vectors of the time series of the second class (NC).

6. Method according to claim 5, wherein the distance is defined as the minimum ($d_{min}$) from the maximum distance of a function value of the model function for a training time series of the first class (PC) to the maximum function value of the model function for all training time series of the second class (NC).

7. Method according to one of the preceding claims, wherein an additional optimality criterion optimises the model function in respect of low weightings of the states of a state vector in the model function.

8. Method according to one of the preceding claims, wherein the model function is modelled as a function which depends in a linear manner on the states of a state vector.

9. Method according to one of the preceding claims, wherein the model function is determined on the basis of a stochastic optimisation method, and in particular on simulated annealing.

10. Method according to one of the preceding claims, wherein the model function is determined on the basis of a gradient descent method, in particular the conjugated gradient method.

11. Method according to one of the preceding claims, in which the model function is determined on the basis of a combination of stochastic optimisation methods, in particular simulated annealing, and gradient descent methods, in particular the conjugated gradient method.

12. Method according to one of the preceding claims, in which the control of an automation plant is learned, wherein the time series of the first class (PC) are time series for which a predefined action is initiated in the automation plant, and the time series of the second class (NC) are time series for which the predefined action is not initiated in the automation plant.

13. Method for control of a technical system based on time series which in each case comprise a multiplicity of chronologically successive state vectors which contain one or more states of the technical system, wherein in the case of control of the technical system a time series is assigned a classifier of a first or a second class (PC, NC), and the control takes place depending on the assignment of the time series to the first or second class (NC), wherein the classifier is learned with a method according to one of the preceding claims.

**14.** Computer program product with a program code stored on a machine-readable data medium for the performing of a method according to one of the preceding claims, when the program is executed on a computer.

**Revendications**

**1.** Procédé d'apprentissage assisté par ordinateur d'une commande d'un système technique, basé sur des séries temporelles comprenant à chaque fois une pluralité de vecteurs d'état se succédant chronologiquement qui contiennent un ou plusieurs états du système technique, une série temporelle étant affectée à une première ou une seconde classe (PC, NC) lors de la commande du système technique par un classificateur et la commande étant exécutée en fonction de l'affectation de la série temporelle à la première ou à la seconde classe (NC),

- une pluralité de séries temporelles d'apprentissage étant prédéfinies en tant que données d'apprentissage, chaque série temporelle d'apprentissage étant affectée à une première ou à une seconde classe (NC) ;
- le classificateur étant appris en se basant sur les données d'apprentissage, grâce à quoi on obtient un classificateur qui affecte une série temporelle à la seconde classe (NC) d'après une fonction modèle qui contient, en tant que variables, les états d'un vecteur d'état, lorsque la fonction modèle remplit un premier critère de seuil pour tous les vecteurs d'état de la série temporelle, et qui, sinon, affecte la série temporelle à la première classe (PC) ;
- l'apprentissage du classificateur se déroulant de telle sorte que la fonction modèle soit déterminée en se basant sur un ou plusieurs critères d'optimalité,

**caractérisé en ce que**
l'un des critères d'optimalité optimise la fonction modèle pour les séries temporelles d'apprentissage de la première classe (PC) en tenant compte d'un écart réduit par rapport à une fonction cible prédéfinie (T) qui décrit un comportement du système technique pour des séries temporelles de la première classe (PC) en s'appuyant sur un savoir expert, la détermination de la fonction modèle tenant compte de la condition selon laquelle la fonction modèle remplit un second critère de seuil pour tous les vecteurs d'état des séries temporelles d'apprentissage de la seconde classe (NC).

**2.** Procédé selon la revendication 1, les séries temporelles de la première classe (PC) étant **caractérisées en ce qu'**une action prédéterminée est déclenchée dans le système technique pour au moins un vecteur d'état d'une série temporelle respective de la première classe (PC), et les séries temporelles de la seconde place (NC) étant **caractérisées en ce que** l'action prédéterminée n'est déclenchée pour aucun vecteur d'état de la série temporelle respective de la seconde classe (NC).

**3.** Procédé selon la revendication 1 ou 2, le premier critère de seuil pour un vecteur d'état étant rempli lorsque la fonction modèle pour le vecteur d'état se situe en dessous d'une première valeur seuil et/ou le second critère de seuil pour un vecteur d'état d'apprentissage étant rempli lorsque la fonction modèle pour le vecteur d'état d'apprentissage se situe en dessous d'une seconde valeur seuil ($\alpha$).

**4.** Procédé selon la revendication 3, la seconde valeur seuil ($\alpha$) étant inférieure ou exactement égale à la première valeur seuil.

**5.** Procédé selon l'une des revendications précédentes, un critère d'optimalité supplémentaire optimisant la fonction modèle en tenant compte d'un écart important ($d_{min}$) entre la fonction modèle pour les vecteurs d'état des séries temporelles d'apprentissage de la première classe (PC) et la fonction modèle pour les vecteurs d'état des séries temporelles de la seconde classe (NC).

**6.** Procédé selon la revendication 5, l'écart étant défini comme le minimum ($d_{min}$) de l'écart maximum entre une valeur de fonction de la fonction modèle pour une série temporelle d'apprentissage de la première classe (PC) et la valeur de fonction maximale de la fonction modèle pour toutes les séries temporelles d'apprentissage de la seconde classe (NC).

**7.** Procédé selon l'une des revendications précédentes, un critère d'optimalité supplémentaire optimisant la fonction modèle en tenant compte de pondérations réduites des états d'un vecteur d'état dans la fonction modèle.

**8.** Procédé selon l'une des revendications précédentes, la fonction modèle étant modélisée comme une fonction à dépendance linéaire par rapport aux états d'un vecteur d'état.

9. Procédé selon l'une des revendications précédentes, la fonction modèle étant déterminée en se basant sur un procédé d'optimisation stochastique, notamment en se basant sur du *Simulated Annealing.*

10. Procédé selon l'une des revendications précédentes, la fonction modèle étant déterminée en se basant sur un procédé à dégression des gradients, notamment en se basant sur la méthode des gradients conjugués.

11. Procédé selon l'une des revendications précédentes, dans lequel la fonction modèle est déterminée en se basant sur une combinaison d'un procédé d'optimisation stochastique, notamment du Simulated Annealing, et d'un procédé à dégression des gradients, notamment la méthode des gradients conjugués.

12. Procédé selon l'une des revendications précédentes, dans lequel la commande d'une installation d'automatisation est apprise, les séries temporelles de la première classe (PC) étant les séries temporelles pour lesquelles une action prédéterminée est déclenchée dans l'installation d'automatisation et les séries temporelles de la seconde classe (NC) étant les séries temporelles pour lesquelles l'action prédéterminée n'est pas déclenchée dans l'installation d'automatisation.

13. Procédé de commande d'un système technique basé sur des séries temporelles qui comprennent à chaque fois une pluralité de vecteurs d'état se succédant chronologiquement qui contiennent un ou plusieurs états du système technique, une série temporelle étant affectée à une première ou une seconde classe (PC, NC) lors de la commande du système technique par un classificateur et la commande étant exécutée en fonction de l'affectation de la série temporelle à la première ou à la seconde classe (NC), le classificateur étant appris grâce à un procédé selon l'une des revendications précédentes.

14. Produit de programme informatique avec un code de programme enregistré sur un support lisible par machine, pour exécuter un procédé selon l'une des revendications précédentes lorsque le programme s'exécute sur un ordinateur.

## FIG 1

## FIG 2

## FIG 3

## FIG 4

**EP 2 166 491 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19909538 A1

**In der Beschreibung aufgeführte Nicht-Patentliteratur**

- **CHRISTIAN MOEWES.** Application of Support Vector Machines to Discriminate Vehicle Crash Events. *Otto-von-Guericke University of Magdeburg,* 15. Oktober 2007

- **CHRISTIAN MOEWES ; CLEMENS OTTE ; RUDOLF KRUSE.** Tackling Multiple-Instance Problems in Safety-Related Domains by Quasilinear SVM. *Springer Series: Advances in Intelligent and Soft Computing, Soft Methods for Hand. Var. and Imprecision,* September 2008, vol. 48 (8), 409-416